# EUROPEAN PATENT SPECIFICATION

(11) **EP 2 222 806 B1**
(45) Date of publication and mention of the grant of the patent: **26.09.2012**
(21) Application number: 08861370.8
(22) Date of filing: 17.12.2008
(51) Int. Cl.: C09D 179/08, C08G 18/34, C08G 18/36, C09D 175/00, H01F 41/12, C09D 167/06, C09D 177/00

(54) **USE OF A COMPOSTION FOR FIXING WOUND ITEMS**
VERWENDUNG EINER ZUSAMMENSETZUNG ZUR FIXIERUNG GEWUNDENER ELEMENTE
UTILIZATION D' UNE COMPOSITION POUR FIXATION D'ARTICLES ENROULÉS

(30) Priority: 18.12.2007 US 8057 P
(43) Date of publication of application: 01.09.2010
(73) Proprietor: E. I. du Pont de Nemours and Company, Wilmington, DE 19898 (US)
(72) Inventor: BOEHM, Frank-Rainer, 51519 Odenthal (DE); HERM, Michael, 42553 Velbert (DE)
(74) Representative: DuPont Performance Coatings Biering/Blum/Kimpel
(86) International application number: PCT/US2008/087122
(87) International publication number: WO 2009/079542

(56) References cited:
- WO-A-2007/019434
- WO-A-2008/079237
- DE-A1- 10 260 269

## Description

The present invention refers to use of a composition for fixing wound items, in particular wire windings in electrical equipment providing excellent penetrating properties into the wound items.

Electrical equipment, such as rotors, stators or transformers often consist of a metal core around which a foil or wire material, for example a copper foil or wire is wound. The windings in these three-dimensional components are currently impregnated with radically polymerisable compounds and then cured in order to fix the wound items and to maintain their function. Curing is achieved by application of heat at temperatures of above 100°C in an oven or by inductive heating.

The radically polymerisable compounds, known as impregnating resins or agents, contain for example unsaturated polyester resins which are dissolved in unsaturated aromatic or aliphatic radically polymerisable monomers, such as for example styrene or hexanediol diacrylate. Such monomers often have a very high vapour pressure, such that a large proportion thereof escapes during thermal curing. This gives rise to environmental problems; the materials containing styrene have, for example, an unpleasant odour and relatively high toxicity. Disposal, for example by subsequent burning, is thus necessary.

It is known that the heat necessary for curing can be produced by applying an electrical current to the electrically conductive windings after their impregnation.

It is also known to cure the coated electrical wound items with a combination of heat and high energy radiation, for example UV radiation, as disclosed, for example, in DE-A 4022235 and US 5,466,492.

Known are reactive systems based on a reaction product with ethyl alpha-carboxy-beta-cyclopentanoate for the manufacture of coatings for corrosion protection, see DE-A 10260299 and DE-A 10260269. WO 2007/019434 discloses wire coating compositions based on specific resins to increase the enamelling speed significantly. Polyol/isocyanate systems can also be used for impregnation of electrical wound items. Known are two-component (2K) polyol/isocyanate materials known to persons skilled in the art. However, blocked isocyanates are not useable due to undesirable low molecular product emissions that are hazardous to health and due to very low impregnation quality.

The invention provides a use of a composition comprising
(A) 5 to 95 wt%, preferably 5 to 60 wt%, of at least one resin with nucleophilic groups selected from the group consisting of OH, NHR, SH, carboxylate and CH-acidic groups,
(B) 0 to 70 wt%, preferably 1 to 50 wt%, of at least one amide group-containing resin, and
(C) 0 to 95 wt%, optionally 0.1 to 40 wt%, of at least one organic solvent and/or water,
wherein the resins of component (A) and/or component (B) contain α-carboxy-β-oxocycloalkyl carboxylic acid amide groups, the wt% based on the total weight of the coating composition,
for impregnating wound items by immersion impregnation, flow coating, vacuum impregnation, vacuum pressure impregnation or trickle impregnation, and clising the composition for fixing the wound items.

The use according to the invention provides excellent adhesive properties to the wound items as well as an excellent shrinkage and penetration into the wound items. In the use of this invention the impregnating composition can be used as one-component (1K) material, without low molecular product emissions that are hazardous to health.

The features and advantages of the present invention will be more readily understood, by those of ordinary skill in the art, from reading the following detailed description, It is to be appreciated those certain features .of the invention, which are for clarity, described above and below in the context of separate embodiments, may also be provided in combination in a single embodiment. Conversely, various features of the invention that are, for brevity, described in the context of as single embodiment, may also be provided separately or in any sub-combination. In addition, references in the singular may also include the plural (for example, "a" and ''an" may refer to one, or one or more) unless the context specifically -states otherwise.

Slight variations above and below the stated ranges can be used to achieve substantially the same results as values within the ranges. Also, the disclosure of these ranges is intended as a continuous range including every value between the minimum and maximum values.

The use is characterised in that the wound items are impregnated by immersion impregnation, flow coating, vacuum impregnation, vacuum pressure impregnation or trickle impregnation and that the impregnated wound items are additionally cured by high-energy radiation simultaneously with or after thermal curing.

Before or, preferably, after application, it is possible to produce an elevated temperature by passing an electrical current through the wound items. In this manner, crosslinking is initiated immediately on impregnation. The impregnating agents are fixed within the windings (coil) and can no longer flow out.

In order to ensure good penetration, it may be favourable to preheat the object to be impregnated in this manner, by heating provided by electrical current or by a separate heat source, for example, an oven. Heating may proceed during, preferably before impregnation. The temperature should, however, be selected such that good flow is possible. If very low viscosity materials are used gelation may even occur. In this manner, dripping and flow off from the wound items is avoided. This reduces material losses, and results in fewer defects, for example, voids, that are formed in the substrate.

In accordance with the invention, it is also possible to heat the impregnating resin in order to achieve a good penetration into the wound items.

After impregnation, the object is heated in order to cure the impregnating resin. The heat for crosslinking (curing) can be produced by passing a current through the windings, however, it is also possible to use an oven or infrared (IR) or hear infrared (NIR) radiation. The remainder of the curing reaction proceeds by thermal treatment which may be performed on-line or continuously, wherein the temperatures (object temperature) are, for example, in the range from approximately 80° to 180° C with reaction times, which vary depending upon the system to be cured, of for example 1 minute to 180 minutes. In case of NIR radiation, the curing time may be shorter, for example, below 1 minute. Temperature can, e.g., be simply controlled by the quantity of current being passed. No solid parts are heated, so energy consumption remains low.

The impregnating composition according to the invention is possible to apply as water-based or solvent-based coating composition.

The impregnating composition of the invention comprises the components
(A) 5 to 95 wt%, preferably 5 to 60 wt%, of at least one resin with nucleophilic groups selected from the group consisting of OH, NHR, SH, carboxylate and CH-acidic groups,
(B) 0 to 70 wt%, preferably 1 to 50 wt%, of at least one amide group-containing resin, and
(C) 0 to 95 wt%, optionally 0,1 to 40 wt%, of at least one organic solvent and/or water,
wherein the resins of component (A) and/or component (B) contain α-carboxy-β-oxocycloalkyl carboxylic acid amide groups, the wt% based on the total weight of the impregnating composition.

As component A) radically polymerisable compounds may be used which are known at a person skilled in the art as impregnating material for electrical wound items, in a range of 5 to 95 wt%, preferably 5 to 60 wt%, the wt% based on the total weight of the impregnating composition.

Examples of radically polymerisable compounds are customary radiation-curable, in particular UV curable, compounds based on monomers; oligomers, polymers, copolymers or combinations thereof, having one or more olefinic double bonds, such as, for example, esters of acrylic acid and methacrylic acid, together with compounds having one or more vinyl or allyl double bonds, as described, for example, in EP-A 0 643 467.

Radically polymerisable compounds which are particularly suitable for the present invention are those containing olefinically unsaturated polyesters and olefinically unsatured monomers as a reactive diluent, as, e.g., described in EP-A-0 134 513.

As component (A) the following resins may also be used, for example, polyesters, also, polyesters with heterocyclic nitrogen-containing rings, for example, polyesters with imide and hydantoin and benzimidazole structures condensed into the molecule. The polyesters are, in particular, condensation products of polybasic aliphatic aromatic and/or cycloaliphatic carboxylic acids and the anhydrides thereof, polyhydric alcohols and, in the case of the imide-containing polyesters, polyester amino group-containing compounds, optionally, with a proportion of monofuntional compounds, for example, monohydric alcohols. The saturated polyester imides are preferably based on terephthalic acid polyester which may also contain polyols and, as an additional dicarboxylic acid component, a reaction product of diaminodiphenylmethane and trimellitic acid anhydride in addition to diols. Furthermore, unsaturated polyester resins and/or polyester imides, as well as, polyacrylates may also be used. As component A, the following may also be used: polyamides, for example, thermoplastic polyamides, aromatic, aliphatic and aromatic-aliphatic, also polyamide imides of the type produced, for example, from trimelletic acid anhydride and diisocyanatodiphenylmethane.

The resins of component B) can be used in a range of 0 to 70 wt%, preferably 1 to 50 wt%, the wt% based on the total weight of the impregnating composition. The resins of component B) can contain α-carboxy-β-oxocycloalkyl carboxylic acid amide groups. The α-carboxy-β-oxocycloalkyl carboxylic acid amide groups are preferably incorporated in a terminal position. The aforementioned α-carboxy groups are preferably alkyl- or aryl- esterified α-carboxy-β-oxocycloalkyl carboxyl acid amides of this type may be produced, on the one hand, from the corresponding carboxyilic acid or the reactive derivatives thereof, such as, carboxylic acid halide groups, carboxylic acid anhydride groups or the like by reaction with amine groups. It is also expedient to use amidation auxiliaries, such as, dicyclohexylcarbodiimide during synthesis from amine and carboxylic acid. The α-carboxy-β-oxocycloalkyl carboxylic acids, in turn, may be obtained, for example, by reaction with haloformic acid ester under basic conditions and subsequent selective saponification. 1-carboxy-2-oxocycloalkanes may in turn be obtained synthetically, for example, from 1,n-carboxylic acid diesters by reaction with bases with alcohol cleavage. On the other hand, said α-carboxy-β-oxocycloalkyl carboxylic acid amides may also be produced by reaction of said 1-carboxy-2-oxocycloalkanes with isocyanates under basic condition. Said 1-carboxy-2-oxocycloalkanes may be obtained, for example, from glutaric acid dialkyl esters, glutaric acid diaryl esters, adipic acid dialkyl esters, adipic acid diaryl esters, pimelic acid dialkyl esters, pimelic acid diaryl esters, octanoic dyacid dialkyl esters, octanoic dyacid diaryl esters and the alkyl-, aryl-, alkoxy-, aryloxy-, alkylcarboxy-, arylcarboxy-, halogen- and otherwise substituted derivatives thereof, particularly preferably from adipic acid dimethyl and ethyl ester.

The aforementioned isocyanates may be, for example, propylene diisocyanate, trimethylene diisocyanate, tetramethylene diisocyanate, pentamethylene diisocyanate, hexamethylene diisocyanate, ethylethylene diisocyanate, 3,3,4-trimethyl hexamethylene diisocyanate, 1,3-cyclopentyl diisocyanate, 1,4-cyclohexyl diisocyanate, 1,2-cyclohexyl diisocyanate, 1,3-phenylene diisocyanate, 1,4-phenylene diisocyanate, 2,5-tolulene diisocyanate, 2,6-toluylene diisocyanate, 4,4'-biphenylene diisocyanate, 1,5-naphthylene diisocyanate. 1,4-naphthylene diisocyanate, 4,4'-diphenylmethane diisocyanate, 2,4'-diphenylmethane diisocyanate, polynuclear isocyanates which result from the reaction of aniline, formaldehyde and COCl₂ having functionality of > 2, 4,4'-dicyclohexylmethane diisocyanate, 2,4'-dicyclohexylmethane diisocyanate, isophorone diisocyanate, triisocyanatononane or oligomers and polymers built up from these isocyanates (for example, uretdiones, isocyanurates or the like).

Excess urethanes or ureas obtained from said isocyanates, obtainable, for example, by reaction with ethylene glycol, propylene glycol, butane diol, 1,3-propane diol, hexane diol, neopentyl glycol, trimethylol propane, glycerine, pentaerythritol and other diols, triols, tetraols, polyols or else amino alcohols, diamines, triamines and polyamines may also be used.

The aforementioned amines used for amidation may be aliphatic primary diamines, such as, ethylene diamine, propylene diamine, tetramethylene diamine, pentamethylene diamine, hexamethylene diamine, cycloaliphatic diamines, such as, 4,4'-dicyclohexylmethane diamine or else triamines, and it is also possible to use secondary amines. The amines may also be aromatic amines, such as, diaminodiphenylmethane, phenylene diamine, polynuclear aromatic amines with a functionality of > 2, toluylene diamines or corresponding derivatives. It is also possible to use amines with a further functional group in the molecule, for example, amino alcohols, such as, monoethanol amine and/or monopropanol amines, or amino acids, such as glycine, aminopropanoic acids, aminocaproic acids or aminobenzoic acids and the esters thereof:

The α-carboxy-β-oxocycloalkyl carboxylic acid amide groups may also be incorporated directly into component A). This can be achieve, for example, by reaction of the resin of component A) with di- or polyisocyanates and at least one carboxy-β-oxocycloalkane.

As the component C), the composition can contain water and/or one or more low volatile organic solvents, as known in the art, such as, butanol, acetates, in a range of 0 to 95 wt%, optionally 0.1 to 40 wt%, preferably 0 to 40 wt%, the wt% based on the total weight of the impregnating composition.

Conventional additives and auxiliaries known by a person skilled in the art can be used in the impregnating composition of the use, for Example, extenders, plasticising components, accelerators, for example, metal salts, substituted amines, stabilisers, defoamers and flow control agents, also catalysts, such as, tetrabutyl titanate, isopropyl titanate, cresol titanate, the polymeric forms thereof, dibutyl tin dilaurate.

The coating composition may contain pigments and/or fillers, for example based on SiO₂, Al₂O₃, TiO₂, Cr₂O₃, for example, colour-imparting inorganic and/or organic pigments, such as, titanium dioxide or carbon black and effect pigments, such as, metal flake pigments and/or pearlescent pigments.

The conventional additives and auxiliaries as well as pigments and/or fillers can be used in the composition in a range known at a person skilled in the art for example, in a range of 0 to 40 wt%, preferable 0.1 to 30 wt%, the wt% based on the total weight of the impregnating composition.

The coating composition can additionally contain monomeric and/or polymeric element-organic compounds. Examples of polymeric organo-element compounds include inorganic organic hybrid polymers of the type mentioned, for example, in DE-A 198 41 977. Examples of monomeric organo-element compounds include ortho-titanic acid esters and/or ortho-zirconic acid esters, such as, nonyl, cetyl, stearyl, triethanolamne, diethanolamine, acetylacetone, acetoacetic ester, tetraisopropyl, cresyl, tetrabutyltitanate and zirconate as well as titanium tetralactate, hafnium and silicon compounds, for example, hafnium tetrabutoxide and tetraethyl silicate and/or various silicone resins. Additional polymeric and/or monomeric organo-element compounds of this type may be contained, for example in a content of 0 to 70 wt%, the wt% based on the total weight of the impregnating composition.

The composition according to the invention may be produced by simply mixing the individual components together, as known at a person skilled in the art. For example, it is possible to produce a resin dispersion by mixing the resin of component A) with water. The further components are then added, for example, with stirring, to produce a stable dispersion or solution, optionally, with input of heat and dispersing agents. It is also possible to produce a mixture of the resin with the organic solvent. The further components are then added, e.g., by stirring.

Application according to the process of the invention may proceed in the following manner:

By immersion impregnation. In this process the item to be impregnated is immersed in the impregnating resin for a period of time determined, for example, by preliminary testing or, in the continuous process, is drawn through the impregnating resin.

By flow coating: Here the item to be impregnated is placed in an impregnating container, which is then filled with impregnating agent so flooding the substrate.

By vacuum impregnation and vacuum pressure impregnation: When this process is used, the item to be impregnated is first evacuated in a vacuum vessel; once the desired vacuum is achieved, the impregnating agent is transferred from a storage container into the vacuum vessel and then optionally applied to the substrate with pressure.

By trickle impregnation: This process is preferred when impregnating rotors; here the objects are not immersed in the impregnating agent, but the polymerisable compound is applied to the substrate using nozzles. The substrate may, for example, rotate during application.

The composition according to this invention is especially useful for the fixing of wound items such as coiled substrates, especially of coiled wires like magnet wires in electrical devices like rotors, stators or transformers, or of coiled metal foils in the electrical sector, or coiled substrates on the basis of glass fibers, plastic fibers or plastic foils; and may also be used for the impregnation of fabrics.

### EXAMPLES

### Example 1

### Application of Impregnating Compositions of Prior Art

The following commercially available impregnating compositions are used:

### Example 1.1: 2K polyurethane cold curing filled casting resin (Voltatex® CE12)

### Example 1.2: 1K unsaturated polyester impregnating resin (Voltatex® 4012)

The material of Example 1.1 is mixed in a 10:2 ratio with a commercially available oligomer hardener based on diphenylmethandiisocyanate (MDI). The mixture is cured for 24 hours at room temperature and after that at 80°C for 5 hours.

The material of Example 1.2 is cured at 150°C for 1h.

### Example 2

### Application of Impregnating Compositions of the Invention

100 parts of an adduct of an oligomeric derivative of methylene diphenyldiisocyanate and 2-'Oxo-cyclopentylcarboxylic acid ethylester are mixed with 200 parts of castor oil, then 130 parts of an inorganic filler based on SiO₂ are dispersed into the mixture, and 4 parts of an additive package and 4 parts of a curing catalyst are added. This composition is cured as 150°C for 1h.

### Results

The specimens for the following investigations are produced by curing the material of Example 1.1, 1.2 and 2 in an aluminium lid (5cm diameter) according to the curing parameters given in the above Examples. Adhesion to lid is measured by investigation of the ability to remove the cured material from the aluminium lid. Shore D-Hardness is measured by DIN EN ISO 868; shrinkage is measured by ISO 3521.

The results are shown in Table 1.

**Table 1**

| | Example 1.1 | Example 1.2 | Example 2 |
|---|---|---|---|
| Adhesion to lid | medium | medium | good |
| Shore-D hardness | 21 | 79 | 23 |
| Shrinkage | 4% | 11% | 1.5% |

## Claims

1. A use of a comprising
(A) 5 to 95 wt% of at least one resin with nucleophilic groups selected from the group consisting of OH, NHR, SH, carboxylate and CH-acidic groups,
(B) 0 to 70 wt% of a least one amide group-containing resin, and
(C) 0 to 95 wt% of at least one organic solvent and/or water,
wherein the resins of component (A) and/or component (B) contain α-carboxy-β-oxocycloalkyl carboxylic acid amide groups, the wt% based on the weight of the coating composition,
for impregnating

2. The use according to claim 1 of a composition comprising
(A) 5 to 60 wt% of at lesat one resin with nucleophilic groups selected from the group consisting of OH, NHR, SH, carboxylate and CH-acidic groups,
(B) 1 to 50 wt% of at least one amide group-containing resin, and
(C) 0 to 40 wt% of at least one :organic solvent and/or water,
wound items by immersion, flow coating, vaccum impregnation, vaccum pressure impregnation or trickle impregnation.
wherein the resins of component (A) and/or component (B) contain α-carboxy-β-oxocycloalkyl carboxcylic acid amide groups, the wt% based on the total weight of the coating composition.

3. The use according to claims 1 to a wherein curing the impregnated wound items by high energy radiation simultaneously with or after thermal curing.

4. The use according to claims 1 to 3 wherein producing an elevated temperature by passing an electrical current through the wound items before or after application.

5. The use according to claims to 4 wherein preheating the wound item by heating provided by electrical current or by an oven.

6. The use according to claims 1 to 5 wherein olefinically unsaturated polyesters and olefinically unsatured monomers as a reactive diluent and/or polyesters with imide, hydantoin and/or benzimidazole structure condensed into the molecule are used as component A).

7. The use according to claim 1 to 6 wherein resins containing the α-carboxy-β-oxocycloalkyl carboxylic acid amide groups incorporated in a terminal position are used as component B).

## Patentansprüche

1. Verwendung einer Zusammensetzung umfassend:
(A) 5 bis 95 Gew.-% mindestens eines Harzes mit nucleophilen Gruppen ausgewählt aus der Gruppe bestehend aus OH, NHR, SH, Carboxylat und sauren CH-Gruppen,
(B) 0 bis 70 Gew.-% mindestens eines Amidgruppen enthaltenden Harzes und
(C) 0 bis 95 Gew.-% mindestens eines organischen Lösungsmittels und/oder Wasser,
wobei die Harze der Komponente (A) und/oder der Komponente (B) α-Carboxy-β-oxocycloalkylcarbonsäureamidgruppen enthalten, wobei die Gew.-% auf das Gesamtgewicht der Beschichtungszusammensetzung bezogen sind,
zum Imprägnieren von gewundenen Elementen durch Tauchimprägnieren, Flutimprägnierenen, Vakuumimprägnieren, Vakuumdruckimprägnieren oder Träufelimprägnieren.

2. Verwendung nach Anspruch 1 einer Zusammensetzung umfassend:
(A) 5 bis 60 Gew.% mindestens eines Harzes mit nucleophilen Gruppen ausgewählt aus der Gruppe bestehend aus OH, NHR, SH, Carboxylat und sauren CH-Gruppen,
(B) 1 bis 50 Gew.-% mindestens eines Amidgruppen enthaltenden Harzes und
(C) 0 bis 40 Gew.% mindestens eines organischen Lösungsmittels und/oder von Wasser,
wobei die Harze der Komponente (A) und/oder der Komponente (B) α-Carboxy-β-oxocycloalkylcarbonsäureamidgruppen enthalten, wobei die Gew.-% auf das Gesamtgewicht der Beschichtungszusammensetzung bezogen sind.

3. Verwendung nach den Ansprüchen 1 bis 2, wobei die imprägnierten gewundenen Elemente durch Hochenergiestrahlung gleichzeitig mit oder nach Wärmeaushärten ausgehärtet werden.

4. Verwendung nach den Ansprüchen 1 bis 3, wobei das Erzeugen einer erhöhten Temperatur durch Hindurchführen eines elektrischen Stroms durch das gewundene Element vor oder nach der Anwendung erfolgt.

5. Verwendung nach den Ansprüchen 1 bis 4, wobei das Vorerhitzen des gewundenen Elements durch Erhitzen, das durch elektrischen Strom oder durch einen Ofen bereitgestellt wird, erfolgt.

6. Verwendung nach den Ansprüchen 1 bis 5, wobei olefinisch ungesättigte Polyester und olefinisch ungesättigte Monomere als reaktives Verdünnungsmittel und/oder Polyester mit Imid-, Hydantoin- und/oder Benzimidazolstrukturen, die in das Molekül kondensiert werden, als Komponente A) verwendet werden.

7. Verwendung nach den Ansprüchen 1 bis 6, wobei Harze, die die a-Carboxy-β-oxocycloalkylcarbonsäureamidgruppen enthalten, die in eine endständige Position integriert sind, als Komponente B) verwendet werden.

## Revendications

1. Utilisation d'une composition comprenant
(A) 5 à 95 % en pds d'au moins une résine avec des groupes nucléophiles choisis parmi le groupe constitué des groupes OH, NHR, SH, carboxylate et groupes acides CH,
(B) 0 à 70 % en pds d'au moins une résine contenant des groupes amides, et
(C) 0 à 95 % en pds d'au moins un solvant organique et/ou de l'eau,
dans laquelle les résines du composant (A) et/ou du composant (B) contiennent des groupes amides d'acide α-carboxy-β-oxocycloalkyl carboxylique, le pourcentage en poids basé sur le poids total de la composition de revêtement, pour l'imprégnation d'éléments enroulés par imprégnation par immersion, revêtement par écoulement, imprégnation sous vide, imprégnation sous pression sous vide ou imprégnation goutte à goutte.

2. Utilisation selon la revendication 1 d'une composition comprenant
(A) 5 à 60 % en pds d'au moins une résine avec des groupes nucléophiles choisis parmi le groupe constitué des groupes OH, NHR, SH, carboxylate et groupes acides CH,
(B) 1 à 50 % en pds d'au moins une résine contenant des groupes amides, et
(C) 0 à 40 % en pds d'au moins un solvant organique et/ou de l'eau,
dans laquelle les résines du composant (A) et/ou du composant (B) contiennent des groupes amides d'acide α-carboxy-β-oxocycloalkyl carboxylique, le pourcentage en poids basé sur le poids total de la composition de revêtement.

3. Utilisation selon les revendications 1 à 2, dans laquelle le durcissement des éléments enroulés imprégnés s'effectue par irradiation à haut niveau d'énergie soit simultanément avec le durcissement thermique soit après le durcissement thermique.

4. Utilisation selon les revendications 1 à 3, dans laquelle s'effectue la production d'une température élevée en faisant passer un courant électrique à travers les éléments enroulés avant ou après l'application.

5. Utilisation selon les revendications 1 à 4, dans laquelle le préchauffage de l'élément enroulé par chauffage est fourni par un courant électrique ou grâce à une étuve.

6. Utilisation selon les revendications 1 à 5, dans laquelle des polyesters oléfiniquement insaturés ou des monomères oléfiniquement insaturés comme diluants réactifs et/ou des polyesters avec des structures imides, hydantoïnes et/ou benzimidazole condensées dans la molécule sont utilisés pour servir de composant A).

7. Utilisation selon les revendications 1 à 6, dans laquelle les résines contenant des groupes amides d'acide α-carboxy-β-oxocycloalkyl carboxylique incorporés en une solution terminale sont utilisées comme composants B).
